# EUROPEAN PATENT APPLICATION

(11) **EP 1 832 693 A1**
(43) Date of publication of application: **12.09.2007**
(21) Application number: 06425153.1
(22) Date of filing: 08.03.2006
(51) Int. Cl.: E04F 15/10

(54) **Covering material including natural fibres, for instance for floorings**

(71) Applicant: Artigo S.p.A., 17014 Cairo Montenotte SV (IT)
(72) Inventor: Redfern, Christopher, 20135 Milano (IT)
(74) Representative: Bosotti, Luciano

(57) **Abstract**

A covering (F) such as a flooring (F) in sheet form comprising a matrix of resilient material that incorporates fibres. Such fibres (K) are fibres of plants selected from among the Arecaceae and Agavaceae families, such as for example coconut fibres.

## Description

### Field of the invention

The present invention relates to covering materials and has been developed with particular attention to their possible use in the flooring sector.

### Description of the related art

Resilient coverings, such as for example resilient floorings, comprise a sector with very wide applications. In particular, the expression "Resilient Flooring" or "Resilient Floor Covering" indicates the type of resilient flooring identified as such by the CEN/TC134 Committee operating within the European Committee for Standardisation (CEN), and in particular the type of floorings identified by the standard EN650. Thus within the current meaning of the term these are resilient floorings made with materials including, for example, rubbers (natural, synthetic and artificial), artificial and synthetic resins (for example materials based on polyolefines, polyvinyl chloride and similar substances) plus materials of particular compositions such as for example linoleum.

In the manufacture of coverings of the above-specified type there has, during recent years, increasingly been a tendency to utilise "ecological" materials and procedures, that is such as not to give rise to negative phenomena of impact on the environment; this both with regard to the manufacturing of the covering, and in regard to effects produced after the covering has been laid or installed.

For example, an expression of this trend is the increasing preference given to the use of natural or synthetic rubbers rather than, for example, polyvinyl chloride, or the use of ecological pigments.

In the field of "ecological" materials a potentially important role may be played by natural fibres, such as for example the natural fibres deriving from plants of the Arecaceae and Agavaceae families. The most typical example of a fibre of this type is coconut fibre (coconut palm).

Fibres of this type have long been used, in particular in far Eastern countries, to produce floorings. In this connection reference may be made, for example, to documents such as JP11013262, JP2000129901, JP2001263691, JP2001328105, JP2003041755, JP2003253869, and JP2004308216.

It is indeed also known, from EP-A-0 795 582, that coconut fibres may be added, in the form of very short fibres of the coconut palm mixed with a keratinous fibre such as animal hair, to a mixture of rubber in the manufacture of snow tires.

### Object and summary of the invention and brief description

Although conceptually attractive, the idea of inserting fibres of plants of the Arecaceae and Agavaceae families into a covering based on natural and synthetic rubbers, mineral fillers, additives, plasticizers, and ecological pigments must come to terms with various requirements, that in practice are in contrast one with another.

For example, in order to be able to contribute to the "ecological" nature of the covering, the fibres must be present in non-negligible quantities.

On the other hand, excessive presence of fibres runs the risk of worsening the mechanical characteristics of the covering. The individual fibres embedded within the matrix of resilient material may indeed comprise, at least theoretically, act as trigger points for stresses that, locally, are very high, capable of having a negative effect on the structural characteristics (stability, resistance to traction, resistance to bending, etc.) of the covering.

The present invention thus addresses the problem of succeeding in adding fibres from plants of the Arecaceae and Agavaceae families to a covering based on natural and synthetic rubber, mineral fillers, additives, plasticizers, and ecological pigments in such a fashion as to be able to take full advantage of the presence of such fibres without that presence having a negative effect on the characteristics of the covering.

According to the present invention, this object is achieved thanks to a covering, for example a flooring, having the characteristics described specifically in the attached claims. These claims form an integral part of the technical instruction provided here in regard to the invention.

In the embodiment that is at present preferred, the product presents a finish on the upper (visible) surface that is smooth, matte or very compactly embossed, with surface finishing treatments.

Apart from the excellent mechanical characteristics of strength, the element characterising the product is the non-directional decoration of an absolutely innovative type, produced by the dispersion of natural fibres in the covering.

### Brief description of the attached drawings

The invention will now be described, as a simple example without limiting intent, with reference to the attached drawings, in which:
- figure 1 shows, in diagram form, the phases of a possible procedure capable of being used to manufacture the covering described here,
- figure 2 shows, in diagram form, the surface appearance of the covering described here, and
- figure 3 is a histogram representing a possible distribution of fibres of different dimensions in a covering of the type described here.

### Detailed description of an embodiment of the invention

In essential terms, to manufacture the covering described here, indicated overall with F, it is possible to employ any procedure currently used to manufacture coverings such as floorings based on rubber or similar substances.

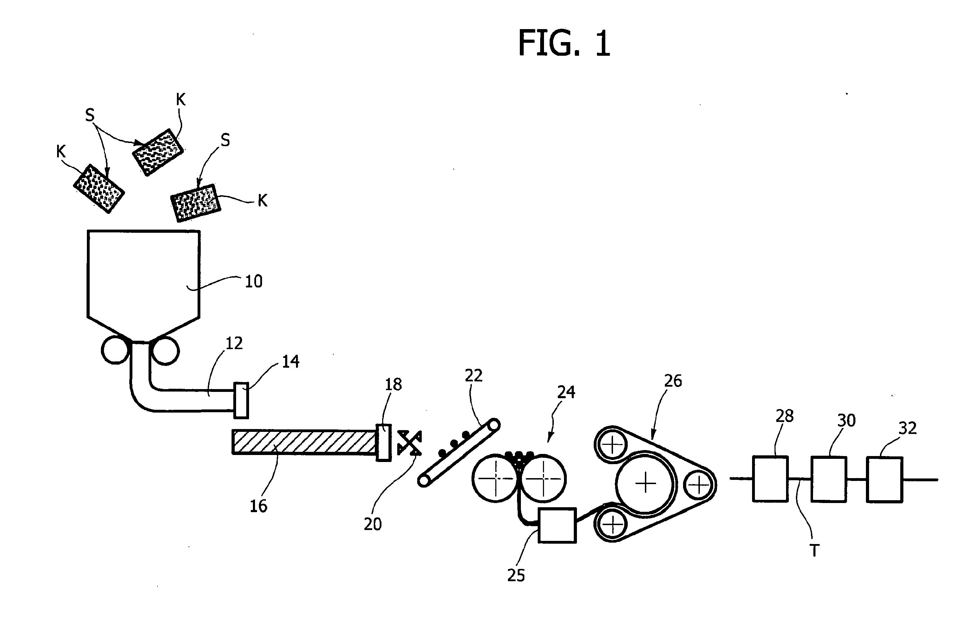

As is illustrated in figure 1 in diagram form, a compound based on natural and/or synthetic rubbers, mineral fillers, additives, plasticizers and ecological pigments is prepared, following known criteria, in a mixer 10, for example of the type usually known as a "Banbury" machine.

During the mixing process fibres K of plants of the Arecaceae and Agavaceae families, such as typically coconut fibres, are added to the compound.

Once the compound has become uniform, it is discharged from the mixer 10 for example in the form of an elongated bar 12 which is subdivided roughly (for example into strips formed in a cutting station 14).

After storage if required (not shown) the material in question is fed into an extruder 16 at the outlet of which is a strainer 18 associated to a cutting head 20 (for example of rotary type) which produces a granular material of rather coarse size.

The granular material produced by the rotary head 20 is fed by means of a conveyor belt 22 into a calendar 24 through which is produced a slab or strip of "raw" covering.

Subsequently, in a station indicated with 25, the phases of buffing the upper (visible) surface of the covering are performed, to reveal the fibres before the calendered product enters the continuous vulcanising station 26 (or "Rotocure" machine) for the final curing process.

At this point the covering passes through successive phases of buffing on the underside (in a buffing station 28), finishing and/or varnishing (in a finishing and/or varnishing station 30) to produce the material F.

The latter is then in general sent to a further cutting station 32 where the material F is subdivided into tiles or alternatively cut into sheets in view of its subsequently being wound onto reels.

The fibres K used may be of their natural colour or dyed, in preference with non-toxic dyes, so as to produce a "tone on tone" chromatic effect on the finished product with regards to the general colour of the compound in which the fibres K are incorporated.

The original length of the fibres used may vary between 20 mm and 450 mm and the decorative effect is typically generated by the dispersion and incorporation of the fibres in the matrix during processing in the mixer 10, with consequent reduction of their dimensions.

The fibres are inserted into the production cycle in a defined and standardised phase so as to guarantee optimal dispersion and the desired aesthetic result. Furthermore, the presence of the fibres so uniformly dispersed in the compound contributes to increasing the dimensional stability of the finished product, limiting some possible surface defects (e.g. blistering) and helping to decrease the residual relative humidity of the compound.

Experiments performed by the applicant show that the type of fibres K employed, as well as the length, diameter, and percentage used, are important parameters to obtain an end-product that is truly satisfactory, also with regard to the decorative effect.

For preference, the fibres K are subjected to a preliminary preparation phase to avoid their becoming the source of undesired dispersion of dust and fine material. This preparation consists in measuring out the required quantity for the production cycle in a protected area and placing it inside sealed bags S, for example made of meltable polyethylene.

The covering F in general presents an overall thickness of between 1.5 and 5 mm, and possesses a perfectly uniform final structure.

Depending on the different requirements, the dimension and concentration of fibres may vary, while remaining within the relative quantities specified below.

Typically, the percentage of fibres - in weight on the total weight of the covering F - is between 0.5% and 8% approximately, with preferable values between 1% and 6.5% approx., and particularly preferable values between 2.5% and 5% approx., the value at present considered optimal being approximately 4%.

It will be appreciated that, even where this is not expressly indicated with the expression "approximately" or "about", all numerical values indicated here are to be interpreted taking into account the normal tolerances associated with the determination and measurement of the associated physical quantities.

For a product (covering) F manufactured for example with only fibres from the Arecaceae family, the following types may be specified in detail:
- i) "Bristle Fibre": this is a particularly refined fibre with no granular residue, characterised by an approximate diameter between 0.2 and 1.6 mm;
- ii) "Mattress Fibre": in this case these are fibres with different characteristics than the "Bristle Fibres" and are distinguished by the presence of granular residues. The fibres known as "Mattress Fibres" are not as refined as the "Bristle Fibres":the approximate diameter of the fibres is in the 0.1 to 1.4 mm range and it may be expected to contain between 2.5% and 3.5% of residues deriving from the harder part of the covering of the coconut, thatcloser to the fruit.

The use of the above-indicated fibres to obtain the decoration may come about in a separate fashion or may be a part of the production cycle. In other words, the fibres may be added during preparation of the compound, together with the polymer and other raw materials as described above in reference to figure 1.

In addition or in alternative, the fibres may be added during the phase of calendering the covering (24 in figure 1). Through this latter solution the decorative effect deriving from the presence of the fibres can be accentuated.

The investigations carried out to date by the applicant show that particularly appreciable results, both from the standpoint of mechanical characteristics and with regard to the aesthetic aspect of the covering F, come about in presence of a size distribution and with a percentage of fibres in the product substantially corresponding to the distribution given in the following table.

| Size of decorative fibres (mm.) | Percentage of dispersed fibres (%) |
|---|---|
| 5 | 6.38 |
| 16 | 5.74 |
| 20 | 5.74 |
| 1.5 | 4.78 |
| 1 | 4.63 |
| 4 | 4.31 |
| 3 | 3.83 |
| 19 | 3.83 |
| 4.5 | 3.51 |
| 8 | 3.19 |
| 0.8 | 3.03 |
| 22 | 3.03 |
| 0.5 | 2.87 |
| 2 | 2.87 |
| 6 | 2.87 |
| 2.5 | 2.71 |
| 32 | 2.39 |
| 15 | 2.23 |
| 25 | 2.23 |
| 12 | 2.07 |
| 12.5 | 1.91 |
| 7.5 | 1.59 |
| 30 | 1.59 |
| 10 | 1.44 |
| 7 | 1.28 |
| 38 | 1.28 |
| 45 | 1.28 |
| 1.8 | 1.12 |
| 40 | 1.12 |
| 5.5 | 0.96 |
| 6.5 | 0.96 |
| 11 | 0.96 |
| 13 | 0.96 |
| 17 | ' 0.96 |
| 18 | 0.96 |
| 26 | 0.96 |
| 41 | 0.96 |
| 0.6 | 0.80 |
| 0.7 | 0.80 |
| 39 | 0.80 |
| 1.2 | 0.64 |
| 2.1 | 0.64 |
| 8.5 | 0.64 |
| 31 | 0.64 |
| 35 | 0.64 |
| 42 | 0.64 |
| 0.9 | 0.48 |
| 3.5 | 0.48 |
| 27 | 0.32 |

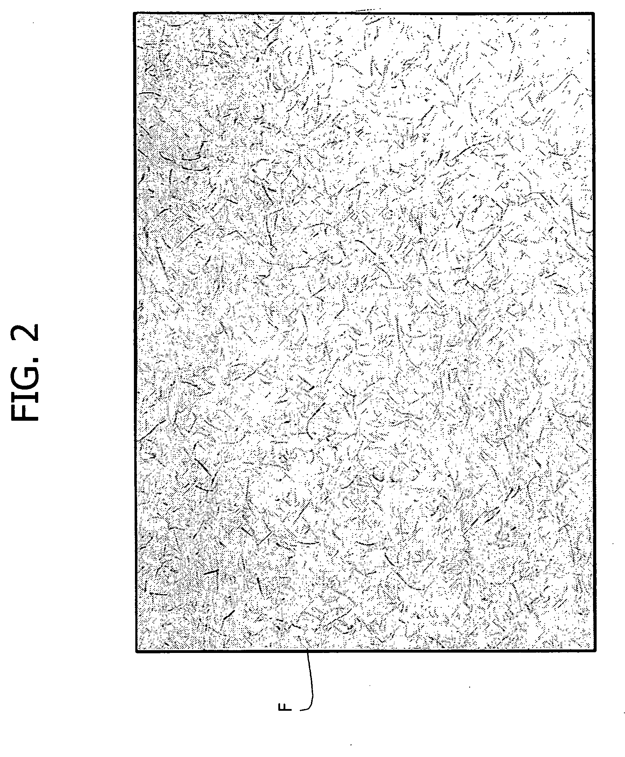

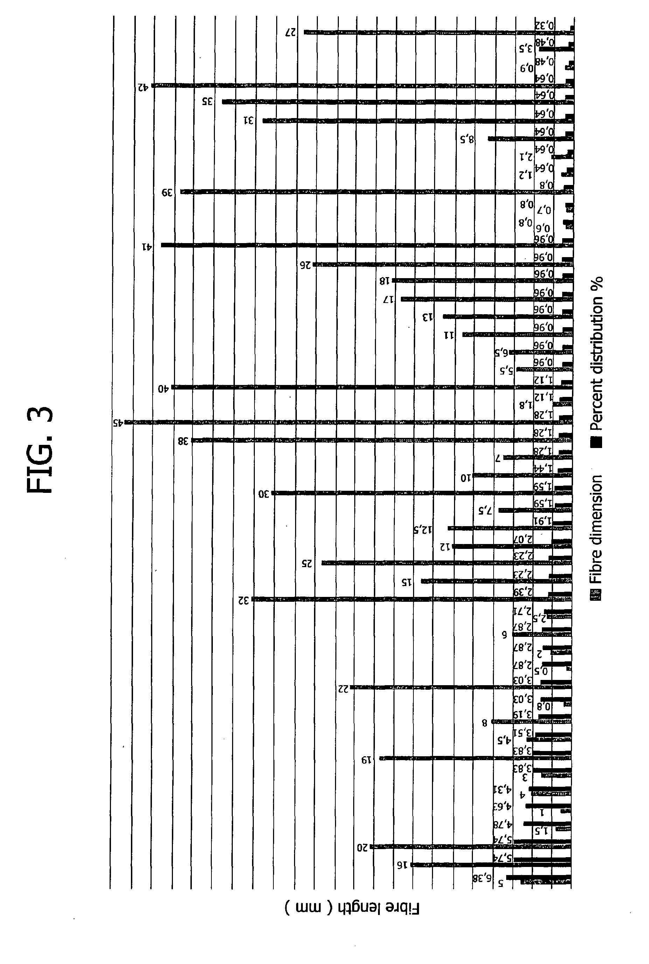

The corresponding histogram is shown in figure 3. As is only partially visible in the reproduction in figure 2, the covering F presents a finish on the upper (visible) surface that is smooth, matte or very compactly embossed, with surface finishing treatment, against which stands out the original non-directional decoration of absolutely innovative type, generated by the dispersion of the natural fibres in the covering.

Naturally, while the principle of the intervention holds good, the manufacturing details and the embodiments may vary widely compared to what is described and illustrated here as a simple example, without thereby departing from the sphere of the invention, as is defined in the attached claims.

## Claims

1. Covering (F) in sheet form comprising a matrix of resilient material that incorporates fibres, in which said fibres (K) are fibres of plants chosen from among those in the Arecaceae and Agavaceae families.

2. Covering according to claim 1, **characterised in that** said fibres (K) are coconut fibres.

3. Covering according to claim 1 or claim 2,
**characterised in that** said covering (F) presents an overall thickness between 1.5 mm and 5 mm.

4. Covering according to any of the claims from 1 to 3, **characterised in that** it presents a uniform final structure.

5. Covering according to any of the above claims, **characterised in that** said covering (F) contains between approximately 0.5% and 8% by weight of said plant fibres (K).

6. Covering according to any of the above claims,
**characterised in that** said covering (F) substantially contains between approximately 1% and 6.5% by weight of said plant fibres (K).

7. Covering according to any of the above claims,
**characterised in that** said covering (F) substantially contains between approximately 2.5% and 5% of said plant fibres (K).

8. Covering according to any of the above claims,
**characterised in that** said covering (F) substantially contains 4% by weight of said plant fibres (K).

9. Covering according to any of the above claims, **characterised in that** said plant fibres (K) present a diameter in the order of approximately 0.2 - 1.6 mm.

10. Covering according to any of the claims from 1 to 8, **characterised in that** said plant fibres (K) present an approximate diameter in the order 0.1 to 1.4 mm.

11. Covering according to claim 10, **characterised in that** said plant fibres (K) present granular residue.

12. Covering according to claim 10, **characterised in that** said plant fibres (K) present granular residue to an extent in the approximate range 2.5% to 3.5% range.

13. Covering according to any of the above claims, **characterised in that** said plant fibres (K) present an overall length between 0.50 and 40 mm approx.

14. Covering according to any of the above claims, **characterised in that** said matrix of resilient material is rubber-based.
